(19) Europäisches Patentamt
European Patent Office
Office européen des brevets

(11) EP 2 261 087 B1

(12) EUROPEAN PATENT SPECIFICATION

(45) Date of publication and mention
of the grant of the patent:
**13.03.2013 Bulletin 2013/11**

(51) Int Cl.:
***B60R 21/0132*** *(2006.01)*

(21) Application number: **09100324.4**

(22) Date of filing: **10.06.2009**

(54) **Method and control device for detecting a location of impact of an object on a ve-hicle**

Verfahren und Steuerungsvorrichtung zur Erfassung einer Aufprallstelle eines Gegenstands an einem Fahrzeug

Procédé et dispositif de contrôle pour détecter l'emplacement d'impact d'un objet sur un véhicule

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**15.12.2010 Bulletin 2010/50**

(73) Proprietors:
• **ROBERT BOSCH GMBH**
**70442 Stuttgart (DE)**
• **Volvo Car Corporation**
**405 31 Göteborg (SE)**

(72) Inventors:
• **Rauh, Christian**
**81377, Muenchen (DE)**
• **Becker, Jens**
**70597, Stuttgart (DE)**
• **Nilsson, Paer**
**41671, Goeteborg (SE)**

• **Lich, Thomas**
**71409, Schwaikheim (DE)**
• **Moldenhauer, Maike**
**71111, Waldenbuch (DE)**
• **Wogel, Anders**
**42470, Olofstorp (SE)**
• **Doerr, Alfons**
**70597, Stuttgart (DE)**
• **Harda°, Peter**
**41324, Goeteborg (SE)**
• **Axelson, Anders**
**42341, Torslanda (SE)**
• **Rittler, Stephan**
**73660, Urbach (DE)**
• **Hiemer, Marcus**
**88074, Kehlen (DE)**

(56) References cited:
**WO-A-2005/036108          DE-C1- 19 632 836
DE-C1- 19 651 123          GB-A- 2 442 987
US-A1- 2003 236 604**

**Description**

Prior art

The present invention relates to a method for detecting a location of impact of an object on a vehicle according to claim one, a computer program product according to claim 10 as well as a control device according to claim 11.

It is a fact that, in recent years, progress has been made in the area of side collisions with respect to both the sensing and the restraint means. For example, acceleration sensors are utilized in the B and C pillars, as well as pressure sensors which are integrated in the doors. New systems also include solid-borne sensors, which must not necessarily be located directly in the collision zone. These sensors detect the intrusion of a vehicle or an object into the vehicle's lateral structure. The signals are correspondingly evaluated in a control device and, if necessary, the appropriate restraint means are fired; same generally are thorax and head airbags, while some manufacturers also have pyrotechnic belt tighteners activated.

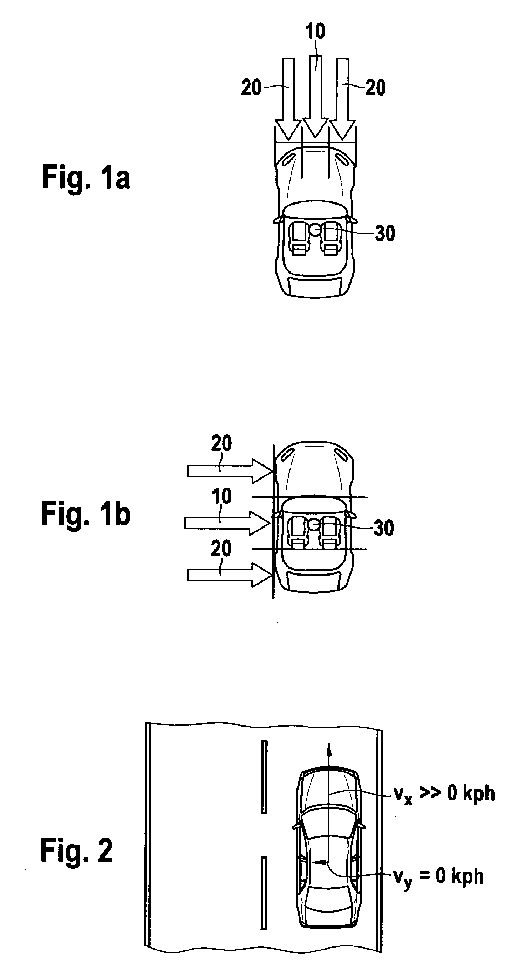

Such collisions directly affecting the sensor system, that is collisions between the A and C pillars, may also be referred to as so-called "in zone impacts". In addition to that, however, it is revealed in a real event of an accident that there also are locations of impact, where neither the sensor system is directly hit nor the sensor system's direct environment is hit. Examples of such locations of impact are the area of the rear wheel cases or the trunk. A minor collision at the mudguard may also occur. Such collisions may also be referred to as "off zone impacts". These stand for all collisions before the A pillar and behind the C pillar. Although these impact zones are recognized by the existing sensor system, they are not regarded as trigger-relevant, as there is no direct intrusion and the vehicle occupants' pattern of injuries differs, with the result that the trigger strategy of restraint means should be correspondingly adjusted. In addition to that, such a location of impact is of significant influence on the further movement of the vehicle, as a torque primarily on the vertical axis is induced with respect to the centre of mass, which leads to a rotation of the vehicle. The difference between "in zone" collisions 10 and "off zone" collisions 20 is exemplarily illustrated in the sub-figures of Fig. 1 for both a frontal (Fig. 1a) and a side collision (Fig. 1b), with the vehicle's centre of mass 30 represented as situated in the "in zone" 10 in both sub-figures.

Similar statements may be made for the front area. Here, the important point is that narrow objects hit in the centre effect a distribution of load to both main chassis beams, while a rotation is unlikely to happen in the further course of the collision. However, in an offset and/or "off zone" frontal crash, there is also present a respective lever directed at the centre of mass, so that a rotation of the vehicle and therefore a yawing and/or a yaw acceleration is subsequently to be expected. In more than 40% of the trigger-relevant frontal collisions in Germany in the years 2001 to 2005, the vehicle rotates by more than 90° to the left or to the right during the crash (i.e. in the accident), which poses a major danger of either a second pole-like collision off-side the road surface taking place or of suffering a follow-up side collision with the oncoming traffic on the road surface. A classification of "in zone" and "off zone" impacts may for example be ascertained via the vehicle width or, in the case of a side collision, via the vehicle length, and may supply valuable information regarding potential follow-up events.

With respect to passive safety, the WO2008048159 A1 is known, in which the above-mentioned collision constellations are specifically observed. In this document, the yaw rate and quantities derived therefrom are accounted for in order to control passive restraint systems in exactly those "off zone impacts" described above. In addition, spatially distributed acceleration sensors are used in order to ascertain - in a manner derived therefrom - the yaw movement of the vehicle so as to therefrom in turn control the above restraint systems.

Furthermore GB 2 442 987 describes a method, and control device, for classification of a crash of a vehicle whereby a linear movement is compared with a threshold, and if the threshold is exceeded then a rotational movement is compared with a second threshold, if the second threshold is not exceeded the airbag is not triggered.

Disclosure of the invention

On this background, the present invention serves to present a method as well as a control device employing this method and finally a respective computer program product according to the independent claims. Advantageous embodiments result from the respective dependent claims and the subsequent description.

The present invention provides a method for detecting a location of impact of an object on a vehicle, comprising:

- receiving a lateral acceleration value representing a lateral acceleration of the vehicle substantially transversely to a longitudinal axis of the vehicle and receiving a longitudinal speed value representing a speed of the vehicle substantially in the direction of the longitudinal axis or receiving a longitudinal acceleration value representing an acceleration substantially in the direction of the longitudinal axis of the vehicle and receiving a yaw rate value representing a rotation or a rotation rate of a rotation of the vehicle on a vertical axis of the vehicle;
- determining a location of impact of the object on a lateral side of the vehicle on the basis of the lateral acceleration value and the longitudinal speed value or determining the location of impact of the object on a front or rear side of the vehicle on the basis of the longitudinal acceleration signal and the yaw rate.

The present invention further provides a control device configured to perform and/or control the steps of a method of the preceding claims. This alternative embodiment of the invention in the form of a control device may also serve to achieve the object underlying the invention in a fast and efficient manner.

At hand, a control device may be an electric device, which processes sensor signals and, in dependence thereon, outputs control signals. The control device may comprise an interface, which may be configured in hardware and/or in software. In the case of a configuration in hardware, these interfaces may, for example, be part of a so-called system ASIC, which comprises diverse functions of the control device. However, it is also possible that the interfaces be individual, integrated circuits or at least partially consist of discrete components. In the case of a configuration in software, the interfaces may be software modules, which may be provided on a microcontroller next to other software modules, for example. What is also advantageous is a computer program product with a program code stored on a machine-readable carrier such as a semiconductor memory, a hard disk or an optical memory and utilized for performing and/or controlling the steps of the method of any one of the aforementioned embodiments, when the program is executed on a control device or a data processing system.

The present invention is based on the finding that an impact of an object on the vehicle in an "off zone" (i.e. in an outer area of the vehicle, in which the vehicle's centre of mass is not disposed) has a different effect on a slip angle of the vehicle than the impact of the object in an "in zone". For example, when the object laterally hits a central part of the vehicle, the vehicle will be laterally offset by a large degree and will only be slightly decelerated in the longitudinal direction (i.e. in the direction of travel), so that there will only be a slight rotation. However, if the object laterally hits the vehicle in a front or rear area, the vehicle will only be slightly laterally offset and offset to a higher degree in the longitudinal direction, wherein, in addition, it will rotate significantly. On the basis of the evaluation of the longitudinal speed and the lateral acceleration, that is the traverse acceleration with respect to the direction of travel, the location of the impact of the object on the vehicle's lateral side may thus be detected. A similar case is that of an impact of an object on the front or rear side of the vehicle. If the object, which may be an oncoming vehicle, a pole or a tree, for example, impacts in an outer area of the vehicle, a rotation will be induced in the vehicle due to the lever arm directed at the vehicle's centre of mass. However, if the object impacts on the front or rear side of the vehicle in a central area comprising the vehicle's centre of mass, the substantial effect will be a major deceleration of the vehicle in the longitudinal direction and a very small rotation. Thus, the location of the impact of the object on the vehicle's transverse side such as the front or rear side of the vehicle may also be defined by the analysis of two parameters, wherein, in this case, values regarding a rotation and a longitudinal acceleration of the vehicle would have to be evaluated. Both approaches for determining the location of the impact of an object on the vehicle (either on the vehicle's lateral side or the vehicle's transverse side) use the approach of evaluating an alteration of the slip angle of the vehicle after the impact, wherein the actual slip angle as such does not necessarily have to be established but may be mapped by the respective parameters.

The present invention has the advantage that an additional recognition of the vehicle movement is made possible in a simple manner by means of signals and/or signal values that in most cases are already available. This, in turn, facilitates an improved selection of occupant safety means to be activated in order to provide the vehicle's occupant with maximum protection in the case of an accident. For example, if a major rotation of the vehicle is detected, first a head or side airbag may be triggered, even if the actual collision occurs in the vehicle's front or rear area. Thereby, the impact of the occupant's head or thorax against a side structure of the vehicle is prevented, which helps to prevent the danger of the occupant suffering an injury in the case of a lateral impact in the vehicle's front or rear area. At the same time, the thorax airbag, for example, may be saved for a subsequent secondary collision.

In an advantageous embodiment of the present invention, in the step of determining the location of impact of the object on a lateral side of the vehicle, a differentiation between an impact in a lateral side central area and an impact in a lateral side outer area can be accomplished, or, in the step of determining the location of impact of the object on a front or rear side of the vehicle, a differentiation between an impact in a transverse side central area and an impact in a transverse side outer area can be accomplished, wherein a centre of mass of a vehicle is located in the lateral side central area or in the transverse side central area. Such a differentiation between a respective outer area or, respectively, central area, which comprises the vehicle's centre of mass, offers a simple and fast possibility of determining whether the object hits the vehicle in a safety-critical area. By means of this discrimination of two (or three) areas each per lateral or transverse side, respectively, correspondence to reality is maximized, as it mostly suffices to define the impact of the object in these areas. Here, it is, in most cases, of no importance, at which exact position the object impacts on the vehicle.

A further advantage is given if a step of triggering passenger safety means is provided, wherein, in the step of triggering, the passenger safety means is triggered in response to a certain impact in the lateral side outer area or the transverse side outer area. Such an additional step specifically offers a chance of selecting a trigger strategy adapted to the respective impact in the lateral side outer area or in the transverse side outer area, which especially applies to the case that a rotation of the vehicle on the vertical axis (a so-called "yawing") occurs. This facilitates additional flexibility at the cost of minimum additional expenditure, whereby the safety for an occupant of the vehicle may be increased.

Also, the step of determining the location of impact of the object on the lateral side may be effected based on a combination of the lateral acceleration value and the longitudinal speed value, specifically based on a formation of a ratio of the lateral acceleration value and the lateral speed value. Such an embodiment of the present invention offers the benefit of performing a simple and very fast possibility of defining the location of impact of the object on the lateral side of the vehicle.

Furthermore, the step of determining the location of impact of the object on the lateral side may be effected based on a definition of a decrease of a longitudinal speed. Such an embodiment of the present invention facilitates even more precise determination of the impact of location of the object on the vehicle's lateral side, as a very exact differentiation between an impact in the lateral side outer area and an impact in the lateral side central area is possible on the basis of a knowledge of the decrease in longitudinal speed in combination with a knowledge of the lateral acceleration and lateral speed.

In addition, the step of determining the location of impact of the object on the lateral side may be accomplished using a yaw rate value. The yaw rate value, which represents information regarding a rotation of the vehicle on the vertical axis, advantageously enables further specification of the determination of the location of impact, as this information serves to verify the available sensor values with respect to the location of impact of the object on the lateral side.

The step of determining the location of impact of the object on the lateral side may specifically comprise a logic operation of comparison values, the comparison values being obtained by a comparison of the longitudinal speed value or a speed value derived therefrom with the lateral acceleration value or an acceleration value derived therefrom, or by a comparison of the longitudinal speed value or a speed value derived therefrom and/or the lateral acceleration value or an acceleration value derived therefrom with a threshold value. By such a logic operation of comparison values, a fast evaluation of the location of impact on the vehicle's lateral side may be accomplished in a simple manner with respect to numerics or wiring. Such a fast evaluation in order to obtain an early activation of respective passenger restraint means is highly desired.

A further advantage is presented when, in a further embodiment of the invention, the step of determining the location of impact of the object on the front or rear side of the vehicle comprises a logic operation of comparison values, the comparison values being obtained by a comparison of the longitudinal acceleration value or a value derived therefrom with a threshold value, or by a comparison of the yaw rate value or a value derived therefrom with a threshold value. By such a logic operation of comparison values, a fast evaluation of the location of impact on the vehicle's front or rear side may be effected in a simple manner with respect to numerics or wiring. Such a fast evaluation in order to obtain an early activation of respective passenger restraint means is highly desired.

Furthermore, according to a further embodiment of the present invention, it is also possible that the step of determining a location of impact of the object on the lateral side of the vehicle or the step of determining a location of impact of the object on the front or rear side of the vehicle comprise recognizing a sign of a yaw rate value, wherein, furthermore, a vehicle rotation direction is ascertained using the certain sign. Such an embodiment of the present invention offers the chance of performing a specific trigger strategy in dependence on the orientation of the rotation of the vehicle. Thus, the occupant's safety may be increased by an additional option of analyzing the sensor values available, which is technically easy to implement.

In the following, the invention is discussed in further detail by means of the accompanying drawings exemplarily.

Fig. 1    shows a representation for the definition of an "in zone" and an "off zone" collision for the vehicle front and the vehicle side;

Fig. 2    shows a representation of a steady driving situation, in which the slip angle amounts to ~0°, so that there is no lateral speed and a very slight alteration of the slip angle or the deviation of the side slip angle;

Fig. 3a    shows a representation of an "in zone" collision of an oncoming vehicle with the vehicle observed;

Fig. 3b    shows a representation of a collision for emphasizing the correlation in an "in zone" impact, in which there is a low yaw rate or yaw acceleration in contrast to a high intrusion;

Fig. 4a    shows a representation of an "off zone" collision of an oncoming vehicle with the vehicle observed;

Fig. 4b    shows a representation of a collision with a large lever arm, wherein a very small intrusion into the passenger cell and therefore a high induced alteration of the slip angle occurs;

Fig. 5    shows a block diagram for the recognition of a lateral "in zone" or "off zone" situation by means of the alteration of the slip angle in considera- tion of the longitudinal speed with a saving path via the lateral accelera- tion or either the lateral speed accumulated by the lateral acceleration;

Fig. 6    shows a block diagram on a first possible realization for ascertaining the alteration of the slip angle for "in zone" and "off zone" impacts for frontal collisions; and

Fig. 7    shows a flow chart of a further embodiment of the present invention in the form of a method.

In the figures below, like or similar elements may be provided with like or similar reference numbers, with a repeated description being dispensed with. In addition, the Figs. of the drawings, the description thereof as well as the claims include numerous features in combination. A person skilled in the art clearly understands that these features may also be regarded individually or that they may be combined to form further combinations that are not explicitly described herein. Furthermore, the invention may in the following description be discussed using different measures and dimensions, whereby stating these measures and dimensions is not to be understood such that the invention is to be understood as limited to these measures and dimensions.

Among other things, the invention is aimed at providing a method, which recognizes and separates out a lateral or a frontal "off zone impact" (i.e. an impact of an object on the vehicle in an outer area on the front, rear or lateral side), and performs a triggering of passive restraint means, preferably of the irreversible restraint means. The recognition and separation of this situation is e.g. effected on the basis of an alteration of the slip angle, wherein a calculation of a precise alteration of the slip angle is not mandatory. The reason is that the buildup of a yaw rate and yaw acceleration and therefore an induction of a rotation in the vehicle is effected with respect to the centre of mass, taking the vehicle's intrinsic speed in such collisions into account. Apart from the recognition of the situation, the invention is furthermore aimed at providing the respective trigger strategy for the passive safety systems. This also includes a respective safing path of the individual trigger situation.

In the case of a lateral offset, the ascertaining may be performed in analogy to DE 10 2005 037961 A1, for example, this, however, just being one option for the specific realization of the invention. Document DE 10 2005 037961 A1 is therefore, by means of this citation, in its entirety included in the present patent application by means of reference thereto.

One important aspect of the invention is the provision of a method for recognizing lateral and/or frontal "off zone impacts" by means of the alteration of the slip angle in consideration of the preceding vehicle movement (e.g. the velocity v). A further important aspect of the invention is the separation of "in zone" and "off zone" collisions and the provision of a trigger strategy for controlling the preferably passive restraint systems, which is specifically adapted to the respective situation. This yields the following benefits:

1. Accounting for the collision-induced rotation in the trigger behavior of the restraint means, as there will be no intrusion and therefore no triggering the thorax airbag when the vehicle is hit in the "off zone" in a side collision is necessary. Rather, this presents the advantage of there being additional potential for protection in a subsequent collision on the same side of the vehicle that involves high intrusion by retriggering the same and/or additional restraint devices.
2. This analogously applies to a frontal collision. As a major rotation of the vehicle is to be expected, the front airbag may be saved for later as the occupant preferably moves sideways or in the direction of the speed of the centre of mass, which is why an activation of the head airbag is more reasonable.
3. Multiple use of the sensors available in the vehicle such as e.g. the yaw rate sensor, which are already present in an airbag control device or by means of peripheral sensors.
4. It is possible to introduce different activation thresholds for the method, which offers a high degree of flexibility and may therefore be configured correspondingly "adaptively" in the real world.
5. The method may be realized in a simple manner as the existing sensor system is present in the vehicle and the calculation does not have to be explicitly performed but may be realized on the basis of simple comparison operations.
6. The method is independent of vehicle types as the crash or accident physics dominates here, which allows for a fast recognition of the crash or accident type and therefore saving on runtime as compared to known methods.
7. Separating out the crash type is therefore also possible so that future applications may be designed simpler, which offers a chance for reducing the application costs.
8. Independency of the installation location of the yaw rate sensor, which is of advantage when the yaw rate sensor is employed in a unit incorporated remote from the vehicle's centre of mass.

The alteration of the slip angle is yielded from the following correlation (the formula may be derived from the classic kinematics equation):

$$\dot{\beta} = \omega_z - \frac{a_y \cos^2(\beta)}{v_x} + \frac{a_x \sin(\beta)\cos(\beta)}{v_x}$$

in which,
$\beta$ = alteration of the slip angle
$\omega_z$ = yaw rate, rotation on the vertical axis
$a_x$ = longitudinal acceleration

$a_y$ = lateral acceleration
$v_x$ = longitudinal speed

Assuming a steadily driving vehicle, the slip angle will approximate 0°. Fig. 2 shows this exemplarily by means of a vehicle driving under so called "normal" driving conditions. The longitudinal speed $v_*$ is significantly higher than 0 kph (i.e. $v_x \gg 0$ kph), whereas the lateral or transverse speed $v_y$ = 0 kph. For a steady cornering, the alteration of the slip angle $\beta$ is also constant but different from zero and small in magnitude (not drafted here).

With respect to the above formula, the following assumption may be made:

$$cos(\beta) \approx 1.0$$

$$sin(\beta) \approx 0.0$$

This yields the following simple correlation regarding the alteration of the slip angle:

$$\dot{\beta} = \omega_z - \frac{a_y}{v_x}$$

As the slip angle approximates 0°, the result is that there will also be no significant alteration of the slip angle in normal travel. Thus, assuming $\beta \approx 0.0$ °/s, the above formula may be rewritten as follows:

$$\dot{\beta} = \omega_z - \frac{a_y}{v_x} \approx 0 \Rightarrow \omega_z = \frac{a_y}{v_x}$$

This means that the ratio of transverse acceleration and longitudinal speed is approximately equal to the yaw rate of the vehicle. These ratios may now be used for the classification of "in zone" or "off zone" impacts and be differentiated by the following situations:

   1. Front and/or side collision with less rotation and high intrusion - "in zone" impact
   2. Front and/or side collision with high rotation and less intrusion-"off zone" impact

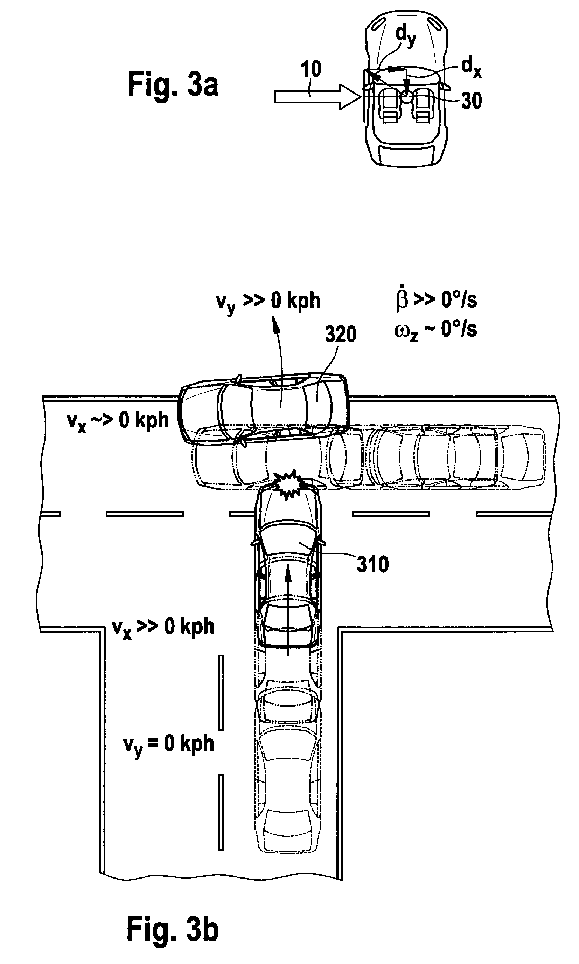

By means of the side collision, an embodiment of the invention is exemplarily discussed in greater detail in the following, with reference to Figs. 3a and 3b.

Fig. 3a illustrates a representation of an "in zone" collision 10 of an oncoming vehicle with the vehicle observed, wherein a slight lever arm towards the centre of rotation or center of gravity 30 of the vehicle is present but a large intrusion in the transverse direction is to be feared. In a "classic" side collision, the vehicle therefore experiences a high lateral acceleration (i.e. a large deflection in the y direction) with respect to the centre of mass, and the lever arm dx in the x direction (the vehicle's direction of travel) is small or in other words no significant distance is given in between center of gravity/center of rotation against the impact point.

Thus, the vehicle also experiences a very slight rotation and therefore a low gyration and/or yaw rate and yaw acceleration. Despite that, the alteration of the slip angle become large in this situation, taking the lateral movement into account, as the vehicle abruptly assumes a respective slip angle, whereby a major alteration of the slip angle is given.

Fig. 3b shows a representation of a collision of an oncoming vehicle 310 with an observed vehicle 320, wherein an "in zone" collision of the oncoming vehicle 310 with a vehicle centre of the observed vehicle 320 is effected. The result is a highly significant intrusion, where the (lateral-) restraint systems should be triggered. The oncoming vehicle 310 has a high longitudinal speed $v_x$, $v_x$ is greater than 0 kph, but the lateral speed $v_y$ equals 0 kph. In the impact of the oncoming vehicle 310 on the observed vehicle 320, the observed vehicle 320 assumes a lateral speed $v_y$ significantly higher than 0 kph, with an alteration of the longitudinal speed $v_x$ of the observed vehicle 320 remaining substantially unchanged. This means that an alteration of the slip angle $\beta$ becomes much larger than 0°/s, while a yaw rate $\omega_z$ amounts to approximately 0°/s. Fig. 3b therefore shows a collision emphasizing the correlation in an "in zone" impact, in which there is a low yaw rate or yaw acceleration in contrast to a high intrusion.

Therefore, the correlation is that the yaw rate (or other quantities derived therefrom, yaw acceleration, jerk in transverse direction and transverse acceleration) is low as compared to the ratio of the transverse acceleration and the vehicle speed. The reason is that the vehicle experiences an alteration of the slip angle caused by the external impact. This means that the yaw rate is small compared to a threshold value Thd1, and that the ratio of the transverse acceleration and the longitudinal speed is very large compared to a threshold value Thd2. This fact may be ascertained as follows by means of the above correlation, without having to explicitly calculate the alteration of the slip angle $\beta$. The following is true:

$$\dot{\beta} = \omega_z - \frac{a_y}{v_x} \gg 0 \implies (\omega_z \approx 0) \wedge \left(\frac{a_y}{v_x} \gg 0\right)$$
$$\implies (\omega_z < Thd_1) \wedge \left(\frac{a_y}{v_x} \gg Thd_2\right) \implies (\omega_z < Thd_1) \wedge \left(\frac{a_y}{v_x} \gg Thd_2\right)$$

or alternatively $\implies \omega_z \cdot v_x \ll a_y \implies ((\omega_z \cdot v_x \ll a_y)) \wedge (\omega_z < Thd_4)$

. However, the position of impact on the lateral side can be determined by using the lateral acceleration value and the longitudinal speed value in combination with a threshold value or by using the yaw rate in combination with the lateral acceleration and the longitudinal speed..

Alternatively, the product of yaw rate and longitudinal speed may be contrasted with the lateral acceleration. This would mean that the product is much smaller than the transverse acceleration and that the yaw rate is smaller than a threshold value Thd4. It is obvious that other calculations derived from the above formulas lead to the same results and thereof also can be used.

This situation recognition may be ascertained by means of a simple "if-then-else" query. If this condition is satisfied, a side collision with low rotation may be recognized. A first possible safing may be ascertained as follows:

As a rule, this ratio may also be indirectly stated as a measure of the buildup of a transverse speed, as the longitudinal speed is decreased (due to the collision), while the transverse movement increases.

Therefore, in a rough assumption, the transverse speed may be calculated from:

$$v_y \approx v_x - \int a_z \, dt > Thd$$

Same may be used as an additional safing signal for such collisions in the "off zone" area, as this integral will be very small in such situations. Instead of using the lateral velocity either the lateral acceleration can be used as a safing signal.

A further possible safing may be effected via distributed acceleration sensors, which identify the vehicle's rotation. This is described in DE 10 2004 004491, for example. What is described is a method ascertaining the yaw rate of the vehicle on the basis of distributed linear acceleration sensors. Here, apart from the rotation, the gyration on the longitudinal and/or transverse axis is also accounted for. The disclosure of DE 10 2004 004491 is herewith entirely included in the present patent application by means of reference. Alternatively, the acceleration sensors of the central airbag control device may also be used.

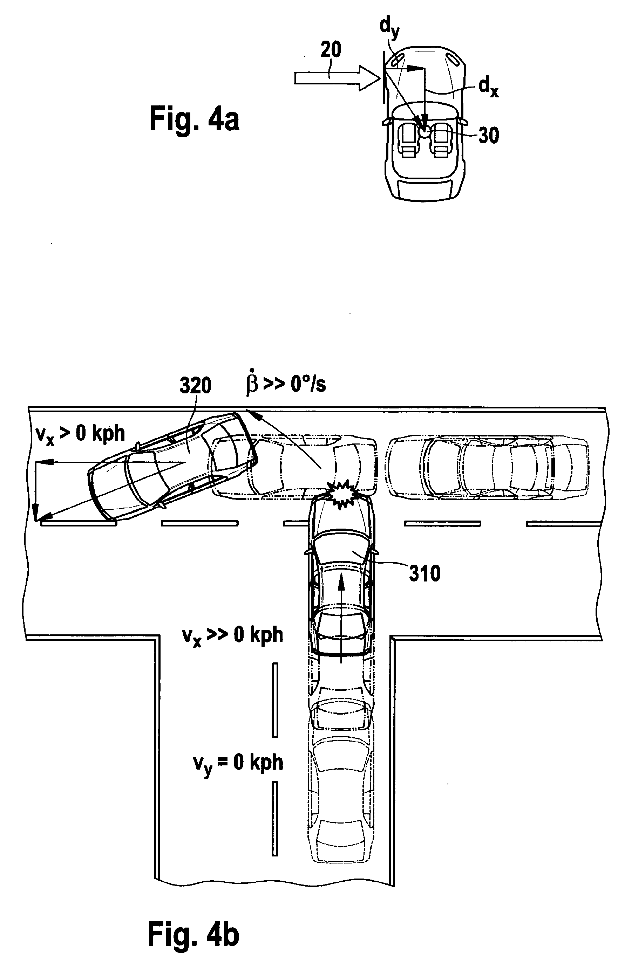

In an "off zone" collision, the point of impact is remote from the centre of mass and therefore from the centre of rotation. Thus, the lever arm dx occurring is larger, and the vehicle experiences a significantly higher torque by the lateral force from the direction dy. This situation is illustrated in Fig. 4a, where an intrusion of objects into the passenger cell is hardly to be feared. Observing a side collision, it may be seen that the alteration of the slip angle and/or the yaw rate and the yaw acceleration as well as quantities derived therefrom are correspondingly high as compared to the transverse acceleration in relation to the longitudinal speed. This means that the alteration of the slip angle is essentially defined by the yaw rate. There is almost no intrusion at the doors or the B and/or C pillars.

Fig. 4b shows a representation of a collision of an oncoming vehicle 310 with an observed vehicle 320, wherein an "off zone" collision of the oncoming vehicle 310 is effected at the rear left side, i.e. outside the vehicle centre, of the observed vehicle 320. Here, there is no significant intrusion, which therefore does not require activation of the lateral restraint means. The oncoming vehicle 310 exhibits a longitudinal speed $v_x$ much higher than 0 kph but a lateral speed $v_y$ of 0 kph. Although the observed vehicle 320 maintains a longitudinal speed $v_x$ higher than 0 kph in the impact of the oncoming vehicle 310 on the observed vehicle 320, this speed is lower than the original longitudinal speed. In the collision, the observed vehicle 320 will however experience an alteration of the slip angle $\beta$ that is significantly larger than 0°/s. Fig. 4b therefore shows a collision with a large lever arm so as to emphasize the correlation in an "off zone" impact, in which a large alteration of the slip angle is induced, while at the same time hardly any intrusion into the passenger cell is to be feared.

Compared to the sectional representations of Fig. 3, it is shown that the lever arm is significantly larger and, as a result, the induced torque is significantly higher so that a rotation of the vehicle will be effected in the further course of the collision.

In a side collision, in which the vehicle experiences a significant rotation, that is a large alteration of the slip angle, the above correlation immediately yields the fact that the yaw portion, i.e. the yaw rate, is much larger than the ratio of the transverse acceleration and the vehicle longitudinal speed or the vehicle speed, which may be used in a first approximation. Equally, quantities derived therefrom, such as the yaw acceleration, will be significantly larger or significantly more distinctive than a respective derived transverse acceleration in relation to the longitudinal acceleration. This results in the following possibility of recognizing the above situation from the formulas as given above:

$$\dot{\beta} = \omega_z - \frac{a_y}{v_x} \gg 0 \implies (\omega_z \gg 0) \wedge \left(\frac{a_y}{v_x} \approx 0\right)$$
$$\implies (\omega_z > Thd_1) \wedge (a_y < Thd_2 \cdot v_x)$$

or alternatively $\implies (\omega_z \cdot v_x > k_1 \cdot a_y) \wedge \left(\frac{a_y}{v_x} < Thd_3\right)$

In a first preferred implementation, the yaw rate is larger than a threshold value Thd1, and the transverse acceleration is less than the product of a threshold value Thd2 and the longitudinal speed. Alternatively, the product of the yaw rate and the longitudinal speed may be compared to the product of a factor k1 and the transverse acceleration, and the ratio of the transverse acceleration and the longitudinal speed should be less than a threshold value Thd3. Herewith, an "off zone" collision with a large alteration of the slip angle may be ascertained. It is obvious that other calculations derived from the above formulas lead to the same results and thereof also can be used.

The lateral speed, which was addressed above with respect to the "in zone" collision, is also build up, although, compared to be above calculation, the integral of the transverse acceleration is smaller in an "off zone" collision and may therefore serve as a possible safing signal. In addition, the method of DE 10 2004 004491 may also be used as is already mentioned above. Here, the yaw rate is ascertained from distributed acceleration sensors. For this purpose, the acceleration sensors used in the central airbag control device may also be employed.

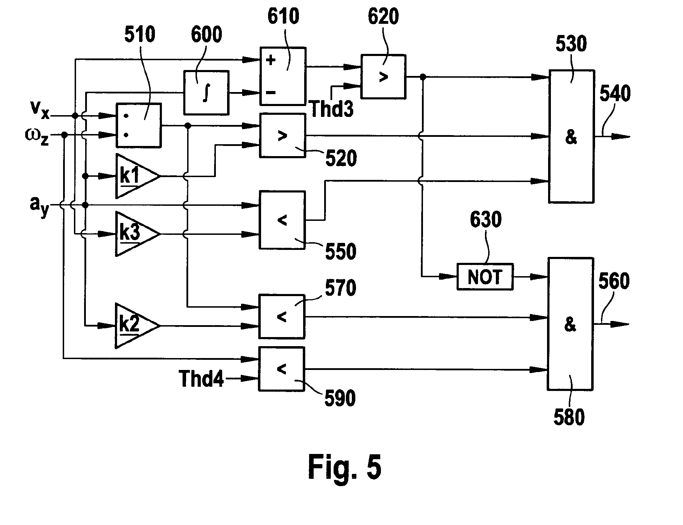

If the two approaches are compared, it may be seen that an "in zone" impact may be differentiated from an "off zone" impact. In the case of an "off zone" impact, the aim may be to suppress non-relevant restraint means such as the triggering of the thorax airbag, for example, and only control activation of the head airbag. A possible exemplary realization of the invention with respect to a recognition of an "in zone" or "off zone" collision is illustrated in the block diagram of Fig. 5:

The signals of longitudinal speed $v_x$ (reference speed, tachometer speed, wheel speeds and/or quantities derived therefrom), yaw rate $\omega_z$ and/or yaw acceleration and/or derivation of the yaw acceleration, transverse acceleration $a_y$, (and/or derived quantities as transverse speed) are input quantities, which are available e.g. in the airbag control device or in a vehicle stability control system like ESC or any other Domain Controller where all quantities available, while these signals or their values, respectively, may also be provided by a CAN bus or another bus system which support the control unit with the signals needed.

In a first method step 510, a multiplication of the longitudinal speed $v_x$ and the yaw rate $\omega_z$ is effected and in a further method step 520 compared to the product of a factor k1 and the transverse acceleration $a_y$. The result is conveyed as an input to the unit 530, which as presented here is designed as an AND gate with three inputs.

Furthermore, for the recognition of the "off zone" situation 540, the transverse acceleration $a_y$ is compared (step 550) to the product of the longitudinal speed $v_x$ and a factor k3. The result of the comparison is again provided to the logic 530 as an input serving for the "off zone" recognition. The ascertaining of the "in zone" situation 560 is first effected by the comparison 570 of the product of the yaw rate $\omega_z$ and the longitudinal speed $v_x$ with the product of the transverse acceleration $a_y$ and a factor k2. The result is supplied to the separate logic 580 - which as presented is also designed in the form of an "AND" gate. In a further method step 590, the yaw rate $\omega_z$ is compared to a threshold value Thd4, the result of which is again conveyed to the logic 580 to be verified.

A first possible saving may be ascertained from an integration 600 of the transverse acceleration $a_y$ and a subsequent difference calculation unit 610 for the longitudinal speed $v_x$. However, the integral may also be directly used as a comparison signal, which is, however, not presented here and might be available as an additional input from a derived signal or sensor input. Alternatively, as mentioned above, the safing may also be affected by distributed acceleration sensors. The result established by the calculation unit 610 (depending on the signal signs a difference is calculated) is compared to a threshold value Thd3 in a further step 620 and supplied to the respective inputs of the "AND" logics 530 and 580. In an "in zone" impact, there is a high buildup of the lateral speed and therefore, there will be a logic "1" if the threshold value is exceeded. In an "off zone" impact, there is comparatively little buildup, which is why the result is firstly interpreted as "0" and therefore no safing given for the "in zone" recognition 530/540. By means of the negation 630 in the "off zone" recognition 560/580, there will, however, be a "1" after the negation 630 as the input of the AND operation 580 for the "off zone" recognition and therefore correct controlling in an "off zone" impact. Accordingly, the lateral restraint means will advantageously be controlled according to the strategy of the "in zone" impact, that is for example the firing of all lateral restraints means such as the curtain and thorax airbag, whereas, in the case of an "off zone" impact, activation of selected restraints for example only the curtain airbag is effected.

This offers the advantage that, as mentioned above, in this scenario/strategy the thorax airbag and/or belt tensioner is available for a further collision. Furthermore, in an additional method step not represented in Fig. 5, the sign of the yaw rate $\omega_z$ may be ascertained so that the location of impact before or after the centre of mass 30 of the vehicle may be detected. This then results in further strategies for controlling the restraint means. It is obvious that the sign of the yaw rate could therefore also be used for a not shown calculation method.

What is also possible but not outlined in Fig. 5, is that the sign of the yaw rate $\omega_z$ may be ascertained so that a safing of the direction of impact may be effected so that, in the further course of the collision, the direction for possible secondary impacts is also available and/or may be used as a possible safing signal or input signal for other calculations like vehicle stability control and/or braking interventions.

As a whole, a logic circuit recognizing an "in zone" situation by means of the following correlation is therefore yielded from Fig. 5:

$$(a_y < k_3 \cdot v_x) \wedge (v_x \cdot \omega_z > k_1 \cdot a_y) \wedge \left(v_x - \int a_x \, dt > Thd_3\right)$$

According to the illustration of Fig. 5, an "off zone" situation is recognized by the following correlation of the signal values:

$$(v_x \cdot \omega_z < k_2 \cdot a_y) \wedge \left(v_x - \int a_y \, dt < Thd_3\right) \wedge (\omega_z < Thd_4)$$

In the case of a frontal collision, the alteration of the slip angle is basically determined by the yaw rate occurring, under the assumption that the initial slip angle is ~0°. There is no transverse acceleration, and therefore the following correlation is true:

$$\dot{\beta} = \omega_z - \frac{a_y}{v_x} = \omega_z$$

This means furthermore, that the yaw rate can be determined form the longitudinal speed $v_x$ and the lateral acceleration $a_y$ such that a value for the yaw rate is not mandatory for determination of the location of impact of an object. However, the knowledge of the yaw rate facilitates the plausibilisation of the obtained results such that in Fig. 5 an embodiment is disclosed in which the yaw rte $\omega_z$ is used.

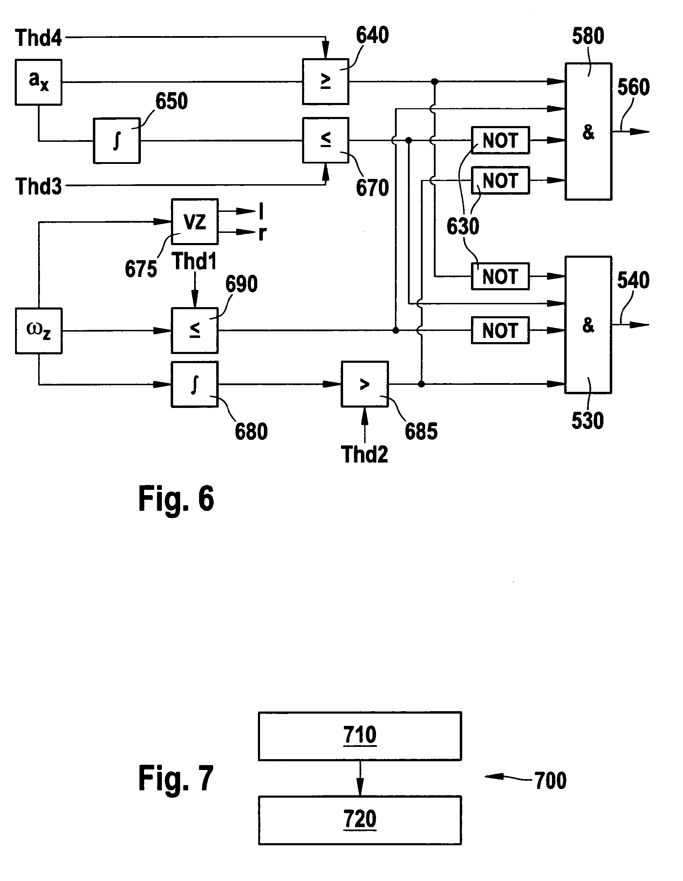

The determination of an "in zone" or "off zone" impact in a frontal collision may then be described in a first embodiment according to the illustration of Fig. 6:

If the peripheral longitudinal acceleration sensors are taken into account, then, in a first method step 640, the longitudinal acceleration $a_x$ will be compared to a threshold value Thd4 and provided to a logic block 580 for the "off zone" recognition. In parallel or subsequently, the integration 650 of the acceleration signal $a_x$ is effected, and the result is compared to a further threshold value Thd3 in a further method step 670. As the integral is a measure of the decreased speed or in other words the deceleration of the vehicle against an object which results in a negative speed buildup, it may also be interpreted to the effect if a narrow or wide object is hit, that is, whether sufficient energy is removed. The result of this threshold value query is supplied to both the "in zone" recognition 580 and the "off zone" recognition 530 (via a negation 630). If the threshold value Thd3 is undershot, not sufficient energy will have been removed, which possibly suggests a narrow object. If, however, sufficient energy is removed, a more or less central impact may be assumed.

If the alteration of the slip angle is to be taken into account here, first the yaw rate $\omega_z$ or a quantity derived therefrom will be subjected to a sign comparison 675, which states the direction in which the vehicle is rotating (either a rotation to left, which is designated with "I" in the representation of Fig. 6, or a rotation to the right, which is designated with "r" in the representation of Fig. 6) and may be used in further method steps with respect to the firing of restraint or supporting other calculations means, should this be necessary. Alternatively or additionally, a switch-off of existing systems may be achieved.

In addition, there is effected the integration 680 of the yaw rate $\omega_z$, which is a measure of the angle of rotation. This angle is compared to a threshold value Thd2 in a further method step 685. If this portion is very high, this will be interpreted as a fast rotation and therefore of an "off zone" situation. The result is provided to the "in zone" recognition 580 (after performing a negation 630 of the comparison result) or the "off zone" recognition 530, respectively. If the measure of the rotation is to be accounted for, the yaw rate $\omega_z$ is compared to a threshold value Thd1 in a further method step 690 and provided to the "in zone" recognition 580 or the "off zone" recognition 530, respectively. If the yaw rate $\omega_z$ turns out very large, an "in zone" situation 560 may be assumed, in the other case an "off zone" situation 540 may be assumed, wherein the comparison result of the method step 690 is subjected to a negation 630 first. The result of the respective logics 580 and 530, which, according to the embodiment illustrated in Fig. 6, are again designed as logic AND gates, then yields a respective situation recognition. As the logics in this first embodiment are logic "AND" gates, it is not possible that both situations occur at the same time or may be recognized at the same time. This is true due to the different negation logics 630.

Fig. 7 shows a flow chart of an embodiment of the present invention in the form of a method 700 for detecting a location of impact of an object on a vehicle, the method comprising a first step of receiving 710 a lateral acceleration value, the lateral acceleration value representing a lateral acceleration of the vehicle substantially transversely to a longitudinal axis of the vehicle and receiving a longitudinal speed value representing a speed of the vehicle substantially in the direction of the longitudinal axis or a first step of receiving a longitudinal acceleration value representing an acceleration substantially in the direction of the longitudinal axis of the vehicle and receiving a yaw rate value representing a rotation or a rotation rate of a rotation of the vehicle on a vertical axis of the vehicle. The method 700 further comprises a second step of determining 720 a location of impact of the object on a lateral side of the vehicle on the basis of the lateral acceleration value and yaw rate and the lateral speed value or of defining the location of impact of the object on a front or rear side of the vehicle on the basis of the longitudinal acceleration signal and the yaw rate.

**Claims**

1. Method (700) for detecting a location of impact of an object on a vehicle, the method (700) comprising:

    receiving (710) a lateral acceleration value ($a_y$) representing a lateral acceleration ($a_y$) of the vehicle substantially transversely to a longitudinal axis of the vehicle and receiving a longitudinal speed value ($v_x$) representing a speed ($v_x$) of the vehicle substantival in the direction of the longitudinal axis ; and

    - determining (720) a location of impact of the object on a lateral side of the vehicle on the basis of the lateral acceleration value ($a_y$) and the longitudinal speed value ($v_x$) ;
    or.
    - receiving (710) a longitudinal acceleration value ($a_x$) representing an acceleration ($a_x$) substantially in the direction of the longitudinal axis of the vehicle and receiving a yaw rate value ($\omega_z$) representing a rotation or a rotation rate of a rotation of the vehicle on a vertical axis of the vehicle; and
    - determining (720) the location of impact of the object on a front or rear side of the vehicle on the basis of the longitudinal acceleration signal ($a_x$) and the yaw rate ($\omega_z$).

2. Method (700) of claim 1, **characterized in that**, in the step of determining (720) the location of impact of the object on a lateral side of the vehicle, a differentiation between an impact in a lateral side central area (10) and an impact in a lateral side outer area (20) is made, or, in the step of determining (720) the location of impact of the object on a front or rear side of the vehicle, a differentiation between an impact in a transverse side central area (10) and an impact in a transverse side outer area (20) is made, wherein a centre of mass (30) of a vehicle is located in the lateral side central area (10) or in the transverse side central area (10).

3. Method (700) of claim 2, **characterized in that** a step of triggering passenger safety means is provided, wherein, in the step of triggering, the passenger safety means is triggered in response to a determined impact in the lateral side outer area (20) or the transverse side outer area (20).

**4.** Method (700) of any one of the preceding claims, **characterized In that** the steep of determining (720) the location of impact of the object on the lateral side is effected based on a combination of the lateral acceleration value ($a_y$) and the longitudinal speed value ($v_x$) and a yaw rate value ($\omega_z$) , specifically based on a formation of a ratio of the lateral acceleration value ($a_y$) and the lateral speed value ($v_x$) and the comparison of the yaw rate ($\omega_z$).

**5.** Method (700) of any one of the preceding claims, **characterized in that** the step of determining (720) the location of impact of the object on the lateral side is effected based on a definition of a decrease of a longitudinal speed ($v_x$).

**6.** Method (700) of any one of the preceding claims, **characterized in that** the step of determining (720) of the location of impact of the object on the lateral side is effected using a yaw rate value ($\omega_z$).

**7.** Method (700) of any one of the preceding claims, **characterized in that** the step of determining (720) the location of impact of the object on the lateral side comprises a logic operation (530, 580) of comparison values, the comparison values being obtained by a comparison of the longitudinal speed value ($v_x$) or a speed value derived therefrom with the lateral acceleration value ($a_y$) or an acceleration value derived therefrom, or by a comparison of the longitudinal speed value ($v_x$) or a speed value derived therefrom and/or the lateral acceleration value ($a_y$) or an acceleration value derived therefrom or an acceleration value derived therefrom with a threshold value (Thd3. Thd4).

**8.** Method (700) of any one of the preceding claims, **characterized in that** the step of determining (720) the location of impact of the object on the front or rear side of the vehicle comprises a logic operation (530, 580) of comparison values, the comparison values being obtained by a comparison of the longitudinal acceleration value ($a_x$) or a value derived therefrom with a threshold value (Thd3, Thd4), or by a comparison of the yaw rate value ($\omega_z$) or a value derived therefrom with a threshold value (Thd1, Thd2).

**9.** Method (700) of any one of the preceding claims, **characterized in that** the step of determining (720) a location of impact of the object on the lateral side of the vehicle or the step of determining (720) a location of impact of the object on the front or rear side of the vehicle comprises recognizing a sign (675) of a yaw rate value ($\omega_z$), wherein, furthermore, a vehicle rotation direction is ascertained using the certain sign (I, r).

**10.** Computer program product with a program code stored on a machine-readable carrier, for performing or controlling the steps of the method (700) of any one of claims 1 to 9, when the program is executed on a control device or a data processing system.

**11.** Control device, configured to perform or control steps of a method (700) of any one of the preceding claims 1 to 9 and comprising at least one Interface for receiving a lateral acceleration value ($a_y$) representing a lateral acceleration ($a_y$) of the vehicle substantially transversely to a longitudinal axis of the vehicle and receiving a longitudinal speed value ($v_x$) representing a speed ($v_x$) of the vehicle substantially in the direction of the longitudinal axis and
at least one ASIC for determining a location of impact of the object on a lateral side of the vehicle on the basis of the lateral acceleration value ($a_y$) and the longitudinal speed value ($v_z$)
or
at least one interface for receiving a longitudinal acceleration value ($a_x$) representing an acceleration ($a_x$) substantially in the direction of the longitudinal axis of the vehicle and receiving a yaw rate value ($\omega_z$) representing a rotation or a rotation rate of a rotation of the vehicle on a vertical axis of the vehicle and
at least one ASIC for determining the location of impact of the object on a front or rear side of the vehicle on the basis of the longitudinal acceleration signal ($a_x$) and the yaw rate ($\omega_z$).

**Patentansprüche**

**1.** Verfahren (700), um eine Stelle eines Aufpralls eines Objektes an einem Fahrzeug zu detektieren, wobei das Verfahren (700) Folgendes umfasst:

Empfangen (710) eines Querbeschleunigungswerts ($a_y$), der eine Querbeschleunigung ($a_y$) des Fahrzeugs im Wesentlichen quer zu einer Längsachse des Fahrzeugs darstellt, und Empfangen eines Längsgeschwindig-keitswerts ($v_x$), der eine Geschwindigkeit ($v_x$) des Fahrzeugs im Wesentlichen in Richtung der Längsachse darstellt; und
Bestimmen (720) einer Stelle eines Aufpralls des Objekts auf einem seitlichen Bereich des Fahrzeugs auf der Basis des Querbeschleunigungswerts ($a_y$) und des Längsgeschwindigkeitswerts ($v_x$);

oder

Empfangen (710) eines Längsbeschleunigungswerts (a$_x$), der eine Längsbeschleunigung (a$_x$) im Wesentlichen in Richtung der Längsachse des Fahrzeugs darstellt, und Empfangen eines Giergeschwindigkeitswerts (ω$_z$), der eine Drehung oder Drehgeschwindigkeit einer Drehung des Fahrzeugs um eine vertikale Achse des Fahrzeugs darstellt; und

Bestimmen (720) der Stelle eines Aufralls des Objekts in einem vorderen oder hinteren Bereich des Fahrzeugs auf der Basis des Längsbeschleunigungssignals (a$_x$) und des Giergeschwindigkeitswerts (ω$_z$).

2. Verfahren (700) nach Anspruch 1, **dadurch gekennzeichnet, dass** in dem Schritt des Bestimmens (720) der Stelle eines Aufralls des Objekts in einem seitlichen Bereich des Fahrzeugs eine Unterscheidung zwischen einem Aufprall in einem seitlichen Mittelbereich (10) und einem Aufprall in einem seitlichen, äußeren Bereich (20) vorgenommen wird, oder dass in dem Schritt des Bestimmens (720) der Stelle eines Aufralls des Objekts in einem vorderen oder hinteren Bereich des Fahrzeugs eine Unterscheidung zwischen einem Aufprall in einem Quer-Mittelbereich (10) und einem Aufprall in einem Quer-Außenbereich (20) vorgenommen wird, wobei ein Massenzentrum (30) eines Fahrzeugs in dem seitlichen Mittelbereich (10) oder in dem Quer-Mittelbereich (10) liegt.

3. Verfahren (700) nach Anspruch 2, **dadurch gekennzeichnet, dass** ein Schritt des Auslösens eines Insassensicherheitsmittels vorgesehen ist, wobei in dem Schritt des Auslösens das Insassensicherheitsmittel als Reaktion auf einen bestimmten Aufprall in dem seitlichen Außenbereich (20) oder in dem Quer-Außenbereich (20) ausgelöst wird.

4. Verfahren (700) nach einem der vorhergehenden Ansprüche, **dadurch gekennzeichnet, dass** der Schritt des Bestimmens (720) der Stelle eines Aufralls des Objekts auf dem seitlichen Bereich durchgeführt wird auf der Basis einer Kombination des Querbeschleunigungswerts (a$_y$) und des Längsgeschwindigkeitswerts (v$_x$) und eines Giergeschwindigkeitswerts (ω$_z$), insbesondere auf der Basis einer Bildung eines Verhältnisses des Querbeschleunigungswerts (a$_y$) und des Längsgeschwindigkeitswerts (v$_x$) und des Vergleiches des Giergeschwindigkeitswerts (ω$_z$).

5. Verfahren (700) nach einem der vorhergehenden Ansprüche, **dadurch gekennzeichnet, dass** der Schritt des Bestimmens (720) der Stelle eines Aufralls des Objekts auf dem seitlichen Bereich durchgeführt wird auf der Basis einer Definition einer Abnahme eines Längsgeschwindigkeitswerts (v$_x$).

6. Verfahren (700) nach einem der vorhergehenden Ansprüche, **dadurch gekennzeichnet, dass** der Schritt des Bestimmens (720) der Stelle eines Aufralls des Objekts auf dem seitlichen Bereich durchgeführt wird unter Verwendung eines Giergeschwindigkeitswerts (ω$_z$).

7. Verfahren (700) nach einem der vorhergehenden Ansprüche, **dadurch gekennzeichnet, dass** der Schritt des Bestimmens (720) der Stelle eines Aufralls des Objekts auf dem seitlichen Bereich eine logische Operation (530, 580) eines Vergleichs von Werten umfasst, wobei der Vergleich von Werten durch einen Vergleich des Längsgeschwindigkeitswerts (v$_x$) oder eines davon abgeleiteten Geschwindigkeitswerts mit dem Querbeschleunigungswert (a$_y$) oder mit einem davon abgeleiteten Beschleunigungswert erhalten wird, oder durch einen Vergleich des Längsgeschwindigkeitswerts (v$_x$) oder eines davon abgeleiteten Geschwindigkeitswerts und/oder des Querbeschleunigungswerts (a$_y$) oder eines davon abgeleiteten Beschleunigungswerts oder eines davon abgeleiteten Beschleunigungswerts mit einem Schwellenwert (Thd3, Thd4) erhalten wird.

8. Verfahren (700) nach einem der vorhergehenden Ansprüche, **dadurch gekennzeichnet, dass** der Schritt des Bestimmens (720) der Stelle eines Aufralls des Objekts auf dem vorderen oder hinteren Bereich des Fahrzeugs eine logische Operation (530, 580) eines Vergleichs von Werten umfasst, wobei der Vergleich von Werten durch einen Vergleich des Längsbeschleunigungswerts (a$_x$) oder eines davon abgeleiteten Werts mit einem Schwellenwert (Thd3, Thd4) erhalten wird, oder durch einen Vergleich des Giergeschwindigkeitswerts (w$_z$) oder eines davon abgeleiteten Werts mit einem Schwellenwert (Thd1, Thd2) erhalten wird.

9. Verfahren (700) nach einem der vorhergehenden Ansprüche, **dadurch gekennzeichnet, dass** der Schritt des Bestimmens (720) einer Stelle eines Aufralls des Objekts auf dem seitlichen Bereich des Fahrzeugs oder der Schritt des Bestimmens (720) einer Stelle eines Aufralls des Objekts auf dem vorderen oder hinteren Bereich des Fahrzeugs ein Erkennen eines Vorzeichens (675) eines Giergeschwindigkeitswerts (ω$_z$) umfasst, wobei außerdem eine Richtung einer Fahrzeugdrehung unter Verwendung eines bestimmten Vorzeichens (1, r) bestimmt wird.

10. Computerprogrammprodukt mit einem Programmcode, der in einem maschinenlesbaren Träger gespeichert ist, um die Schritte des Verfahrens (700) nach einem der Ansprüche 1 bis 9 durchzuführen oder zu steuern, wenn das Programm auf einer Steuervorrichtung oder einem Datenverarbeitungssystem ausgeführt wird.

11. Steuervorrichtung, die konfiguriert ist, die Schritte eines Verfahrens (700) nach einem der vorhergehenden Ansprüche 1 bis 9 durchzuführen oder zu steuern, und die

mindestens eine Schnittstelle zum Empfangen eines Querbeschleunigungswerts ($a_y$), der eine Querbeschleunigung ($a_y$) des Fahrzeugs im Wesentlichen quer zu einer Längsachse des Fahrzeugs darstellt, und zum Empfangen eines Längsgeschwindigkeitswerts ($v_x$), der eine Geschwindigkeit ($v_x$) des Fahrzeugs im Wesentlichen in Richtung der Längsachse darstellt, umfasst und

mindestens einen ASIC zum Bestimmen einer Stelle eines Aufpralls des Objekts in einem seitlichen Bereich des Fahrzeugs auf der Basis des Querbeschleunigungswerts ($a_y$) und des Längsgeschwindigkeitswerts ($v_x$) umfasst oder

mindestens eine Schnittstelle zum Empfangen eines Längsbeschleunigungswerts ($a_x$), der eine Beschleunigung ($a_x$) im Wesentlichen in Richtung der Längsachse des Fahrzeugs darstellt, und zum Empfangen eines Giergeschwindigkeitswerts ($\omega_z$), der eine Drehung oder eine Drehgeschwindigkeit einer Drehung des Fahrzeugs um eine vertikale Achse des Fahrzeugs darstellt, und

mindestens einen ASIC zum Bestimmen der Stelle eines Aufpralls des Objekts in einem vorderen oder hinteren Bereich des Fahrzeugs auf der Basis des Längsbeschleunigungssignals ($a_x$) und des Giergeschwindigkeitswerts ($\omega_z$) umfasst.

## Revendications

1. Procédé (700) pour détecter l'emplacement d'un impact d'un objet sur un véhicule, le procédé (700) comprenant les étapes suivantes :

recevoir (710) une valeur d'accélération latérale ($a_y$) représentant l'accélération latérale ($a_y$) du véhicule sensiblement transversalement à un axe longitudinal du véhicule, et recevoir une valeur de vitesse longitudinale ($v_x$) représentant une vitesse ($v_x$) du véhicule sensiblement dans la direction de l'axe longitudinal ; et

déterminer (720) un emplacement d'impact de l'objet sur un côté latéral du véhicule sur la base de la valeur d'accélération latérale ($a_y$) et de la valeur de vitesse longitudinale ($v_x$) ;

ou

recevoir (710) une valeur d'accélération longitudinale ($a_x$) représentant une accélération ($a_x$) sensiblement dans la direction de l'axe longitudinal du véhicule et

recevoir une valeur de taux de lacet ($\omega_z$) représentant une rotation ou un taux de rotation d'une rotation du véhicule autour de l'axe vertical du véhicule ; et

déterminer (720) l'emplacement d'impact de l'objet sur un côté avant ou un côté arrière du véhicule sur la base du signal d'accélération longitudinale ($a_x$) et du taux de lacet ($\omega_z$).

2. Procédé (700) selon la revendication 1, **caractérisé en ce que**, dans l'étape comprenant de déterminer (720) l'emplacement d'impact de l'objet sur un côté latéral du véhicule, une différentiation entre un impact sur une zone centrale d'un côté latéral (10) et un impact sur une zone externe d'un côté latéral (20) est effectuée, ou, dans l'étape de détermination (720) de l'emplacement d'impact de l'objet sur un côté avant ou un côté arrière du véhicule, une différentiation entre un impact sur une zone centrale d'un côté transversal (10) et un impact sur une zone externe d'un côté transversal (20) est effectuée, où un centre de masse (30) d'un véhicule est situé dans la zone centrale d'un côté latéral (10) ou dans la zone centrale d'un côté transversal (10).

3. Procédé (700) selon la revendication 2, **caractérisé en ce qu'**une étape de déclenchement d'un moyen de sécurité des passagers est pourvue, où, dans l'étape de déclenchement, le moyen de sécurité des passagers est déclenché en réponse à un impact déterminé dans la zone externe d'un côté latéral (20) ou dans la zone externe d'un côté transversal (20).

4. Procédé (700) selon l'une quelconque des revendications précédentes, **caractérisé en ce qu'**une étape comprenant de déterminer (720) l'emplacement d'impact de l'objet sur le côté latéral est effectuée sur la base d'une combinaison de la valeur d'accélération latérale ($a_y$) et de la valeur de vitesse longitudinale ($v_x$) et une valeur de taux de lacet ($\omega_z$), en particulier, sur la base d'une formation d'un rapport de la valeur d'accélération latérale ($a_y$) et de la valeur de vitesse longitudinale ($v_x$) et de la comparaison du taux de lacet ($\omega_z$).

5. Procédé (700) selon l'une quelconque des revendications précédentes, **caractérisé en ce que** l'étape comprenant de déterminer (720) l'emplacement d'impact de l'objet sur le côté latéral est effectuée sur la base d'une définition d'une diminution d'une vitesse longitudinale ($v_x$).

6. Procédé (700) selon l'une quelconque des revendications précédentes, **caractérisé en ce que** l'étape comprenant de déterminer (720) l'emplacement d'impact de l'objet sur le côté latéral est effectuée en utilisant une valeur de taux de lacet ($\omega_z$).

7. Procédé (700) selon l'une quelconque des revendications précédentes, **caractérisé en ce que** l'étape comprenant de déterminer (720) l'emplacement d'impact de l'objet sur le côté latéral comprend une opération logique (530, 580) de valeurs de comparaison, les valeurs de comparaison étant obtenues par une comparaison de la valeur de vitesse longitudinale ($v_x$) ou d'une valeur de vitesse dérivée de celle-ci avec la valeur d'accélération latérale ($a_y$) ou une valeur d'accélération dérivée de celle-ci, ou par une comparaison de la valeur de vitesse longitudinale ($v_x$) ou d'une valeur de vitesse dérivée de celle-ci et/ou la valeur d'accélération latérale ($a_y$) ou une valeur d'accélération dérivée de celle-ci ou une valeur d'accélération dérivée de celle-ci avec une valeur seuil (Thd3, Thd4).

8. Procédé (700) selon l'une quelconque des revendications précédentes, **caractérisé en ce que** l'étape comprenant de déterminer (720) l'emplacement d'impact de l'objet sur le côté avant ou le côté arrière du véhicule comprend une opération logique (530, 580) de valeurs de comparaison, les valeurs de comparaison étant obtenues par une comparaison de la valeur d'accélération longitudinale ($a_x$) ou une valeur dérivée de celle-ci avec une valeur seuil (Thd3, Thd4), ou par une comparaison de la valeur de taux de lacet ($\omega_z$) ou d'une valeur dérivée de celui-ci avec une valeur seuil (Thd1, Thd2).

9. Procédé (700) selon l'une quelconque des revendications précédentes, **caractérisé en ce que** l'étape comprenant de déterminer (720) un emplacement d'impact de l'objet sur le côté latéral du véhicule ou l'étape comprenant de déterminer (720) un emplacement d'impact de l'objet sur le côté avant ou le côté arrière du véhicule comprend de reconnaître un signe (675) d'une valeur de taux de lacet ($\omega_z$), où, en outre, une direction de rotation de véhicule est établie à l'aide dudit signe (1, r).

10. Produit programme informatique dont un code de programme est stocké sur un support lisible par une machine, destiné à exécuter ou contrôler les étapes du procédé (700) de l'une quelconque des revendications 1 à 9, lorsque le programme est exécuté sur un dispositif de commande ou un système de traitement de données.

11. Dispositif de commande, configuré pour exécuter ou contrôler les étapes d'un procédé (700) de l'une quelconque des revendications 1 à 9 et

comprenant au moins une interface pour recevoir une valeur d'accélération latérale ($a_y$) représentant une accélération latérale ($a_y$) du véhicule sensiblement transversalement à un axe longitudinal du véhicule et recevoir une valeur de vitesse longitudinale ($v_x$) représentant une vitesse ($v_x$) du véhicule sensiblement dans la direction de l'axe longitudinal, et

au moins un ASIC pour déterminer un emplacement d'impact de l'objet sur un côté latéral du véhicule sur la base de la valeur d'accélération latérale ($a_y$) et de la valeur de vitesse longitudinale ($v_x$)

ou

au moins une interface pour recevoir une valeur d'accélération longitudinale ($a_x$) représentant une accélération ($a_x$) sensiblement dans la direction de l'axe longitudinal du véhicule et recevoir une valeur de taux de lacet ($\omega_z$) représentant une rotation ou un taux de rotation d'une rotation du véhicule autour de l'axe vertical du véhicule, et

au moins un ASIC pour déterminer l'emplacement d'impact de l'objet sur un côté avant ou un côté arrière du véhicule sur la base du signal d'accélération longitudinale ($a_x$) et du taux de lacet ($\omega_z$).

**Fig. 1a**

10

20 — — 20

30

**Fig. 1b**

20

10

20

30

**Fig. 2**

$v_x \gg 0$ kph

$v_y = 0$ kph

## Fig. 3a

$$10 \quad d_y \quad d_x \quad 30$$

## Fig. 3b

$$v_y \gg 0 \text{ kph} \quad 320$$
$$\dot{\beta} \gg 0°/s$$
$$\omega_z \sim 0°/s$$
$$v_x \sim\!\!> 0 \text{ kph}$$
$$310$$
$$v_x \gg 0 \text{ kph}$$
$$v_y = 0 \text{ kph}$$

Fig. 4a

Fig. 4b

# Fig. 5

**Fig. 6**

**Fig. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008048159 A1
- GB 2442987 A
- DE 102005037961 A1
- DE 102004004491